# EUROPÄISCHE PATENTSCHRIFT

(11) **EP 1 111 816 B1**
(45) Veröffentlichungstag und Bekanntmachung des Hinweises auf die Patenterteilung: **30.08.2006**
(21) Anmeldenummer: 00121733.0
(22) Anmeldetag: 05.10.2000
(51) Int. Cl.: H04B 10/105

(54) **Verfahren und Anordnung zum Verbindungsaufbau zwischen Satelliten**
Method and apparatus for establishing connection between satellites
Méthode et dispositif d'établissement de connexion entre satellites

(30) Priorität: 22.12.1999 CH 235799
(43) Veröffentlichungstag der Anmeldung: 27.06.2001
(73) Patentinhaber: CONTRAVES SPACE AG, 8052 Zürich (CH)
(72) Erfinder: Fischer, Edgar, Dr., 8555 Müllheim Dorf, TG (CH); Maerki, Andreas, 8703 Erlenbach, ZH (CH)
(74) Vertreter: OK pat AG

(56) Entgegenhaltungen:
- WO-A-91/05414
- US-A- 5 659 413
- VICTOR A SKORMIN ET AL: "MATHEMATICAL MODELLING AND SIMULATION ANALYSIS OF A POINTING, ACQUISITION, AND TRACKING SYSTEM FOR LASER-BASED INTERSATELLITE COMMUNICATION" OPTICAL ENGINEERING,US,SOC. OF PHOTO-OPTICAL INSTRUMENTATION ENGINEERS. BELLINGHAM, Bd. 32, Nr. 11, 1. November 1993 (1993-11-01), Seiten 2749-2763, XP000413680 ISSN: 0091-3286

## Beschreibung

Die vorliegende Erfindung betrifft ein Verfahren zum Verbindungsaufbau zwischen einem Empfänger und einem sich entfernt von ihm befindenden Sender mittels Datensignale und Beaconlicht tragender Lichtwellen, wobei zur Akquisition der Lichtwellen im Empfänger ein Akquisitionssensor vorhanden ist, der aus den empfangenen Lichtwellen Akquisitionssensorsignale erzeugt.

Zur Bestimmung von Ausrichtungsdaten zum Aufbau einer optischen KommunikationsVerbindung zwischen zwei Satelliten wird manchmal eine "Weitwinkelkamera" in Zusammenarbeit mit einem sogenannten Beacon-Laser benutzt. Zur Vermeidung komplexerer und daher störanfälliger Suchalgorithmen wird die Kamera in der Regel so ausgelegt, dass sie den gesamten Unsicherheitskonus überblicken kann, der aus der Positionsunsicherheit der eigenen und der Gegenstation sowie der Unsicherheit beider Stationen bezüglich Verkippungen im Inertialsystem entsteht. Infolge des Unsicherheitskonus muss die Kamera einen Winkelbereich von gegen ± 0.5° überblicken. Gleichzeitig beträgt jedoch die natürliche Strahldivergenz des zum Einsatz kommenden Kommunikationsstrahls nur wenige Mikro-Radianten. Diese Gegebenheit erfordert einen extrem grossen Dynamikbereich vom Verhältnis Sehwinkel / erzielbare Winkelauflösung. Erschwerend wirken sich zudem Ausrichtfehler zwischen der Optik der Weitwinkelkamera und der Suchoptik des Kommunikationsstrahls aus. Aufgrund gewisser natürlicher mechanischer Ursachen wird sich der Sendestrahl in einer zufälligen Art und Weise in einem gewissen Raumwinkelbereich bewegen. Bedingt durch die limitierte erzielbare Auflösung der Weitwinkelkamera als auch durch ihre beschränkte elektrische Bandbreite besteht daher eine sehr hohe Wahrscheinlichkeit, dass der Kommunikationsstrahl nur äusserst selten die Gegenstation beleuchtet. Die Gegenstation wird also nicht in die Lage versetzt, sich auf den empfangenen Kommunikationsstrahl auszurichten und damit das höherfrequente "Tracking" mit hoher Winkelauflösung einzuleiten. Im Kommunikationsmodus erfolgt im Normalfall das Verfolgen (Tracking) der Gegenstation mit Hilfe des empfangenen Kommunikationslichts. Zur Gewinnung der räumlichen Ablagesignale (Tracking-Signale) werden Sensoren mit hoher räumlicher und/oder elektrischer Auflösung eingesetzt.

Zur Kontrolle der optischen Ausrichtung zweier Lichtwellen bei kohärentem Überlagerungsempfang ist ferner aus der **EP-0 831 604-A1** eine Vorrichtung mit einem lokalen Laser und mit zwei Detektoren bekannt, die je zwei identische Detektorhälften umfassen, die jeweils durch eine streifenförmige Unterbrechung oder Lücken in der Photodiodenelektrodenfläche zwischen den benachbarten Hälften getrennt sind, wobei die Lücken der zwei Detektoren orthogonal zueinander angeordnet sind. Diese Vorrichtung wird als richtungsselektiver optischer Einmodenempfänger benutzt. Dabei ist sowohl in einem Empfangsteleskop dieser Vorrichtung als auch im Strahlengang des lokalen Lasers eine Abschattung vorhanden. Dies erlaubt, ein Fehlersignal für eine räumliche Strahlregelung eines optischen Überlagerungsempfängers unter weitgehender Vermeidung der systematischen Verluste und unter gleichzeitiger minimaler Beeinträchtigung des zu übertragenden Datensignals mit einem guten Signal-Rausch-Verhältnis zu erzeugen.

Schliesslich ist aus der **EP-0 844 473-A1** eine optische Bank bekannt, deren Bankstruktur derart ausgebildet ist, dass bei einer Wärmedilatation von Armen, die zur Verbindung von Aufnahmeteilen für verschiedene optische Einheiten vorgesehen sind, die Aufnahmeteile ohne Verkippung quer zu Achsen verschiebbar sind, die unter sich und relativ zur Bankstruktur bestimmte Winkellagen einnehmen. Eine solche optische Bank kann mit der eingangs erwähnten Vorrichtung kombiniert werden.

Solche "Tracking-Sensor"-Verfahren erlauben zwar ein gleichzeitiges Kommunizieren und Bestimmen des räumlichen Trackingfehlers, die entsprechenden Vorrichtungen erweisen sich jedoch als nachteilig im Hinblick auf den relativ hohen Justieraufwand, insbesondere bei deren Herstellung.

Es ist daher **Aufgabe** der Erfindung, ein Verfahren und eine Vorrichtung zum Verbindungsaufbau zwischen Satelliten in einer Akquisitionsphase zu schaffen, die zu einer einfacheren Justierung eines solchen Systems führt.

Die **Lösung** dieser Aufgabe erfolgt in vorteilhafter Weise erfindungsgemäss durch ein Verfahren und eine Vorrichtung nach Patentanspruch **1** bzw. **4**.

Durch die Erfindung lässt sich der Aufwand baulicher Art für derartige Systemrealisierungen signifikant reduzieren, was schliesslich zu reduzierten Anforderungen an Komplexität, elektrischen Leistungsbedarf und Masse führt.

Andere vorteilhafte Ausführungen der Erfindung ergeben sich aus den weiteren abhängigen Ansprüchen.

Die Erfindung wird nachfolgend beispielsweise an Hand einer Zeichnung näher erläutert. Es zeigen:
- **Fig. 1**: ein schematisches Blockschaltbild einer erfindungsgemässen Vorrichtung,
- **Fig. 2**: eine schematische Darstellung der Bewegung eines Lichtflecks auf der Stirnfläche einer Lichtwellenfaser,
- **Fig. 3**: ein schematisches Diagramm des zeitlich asymmetrischen Intensitätssignals auf den Detektoren, falls die Faserachse nicht konzentrisch um die optische Achse des optomechanischen Systems rotiert, und
- **Fig. 4**: eine vereinfachte Darstellung einer Vorrichtung zum Kalibrieren der Ablage eines Empfangsstrahls in einem Terminal von seiner Soll-Lage.

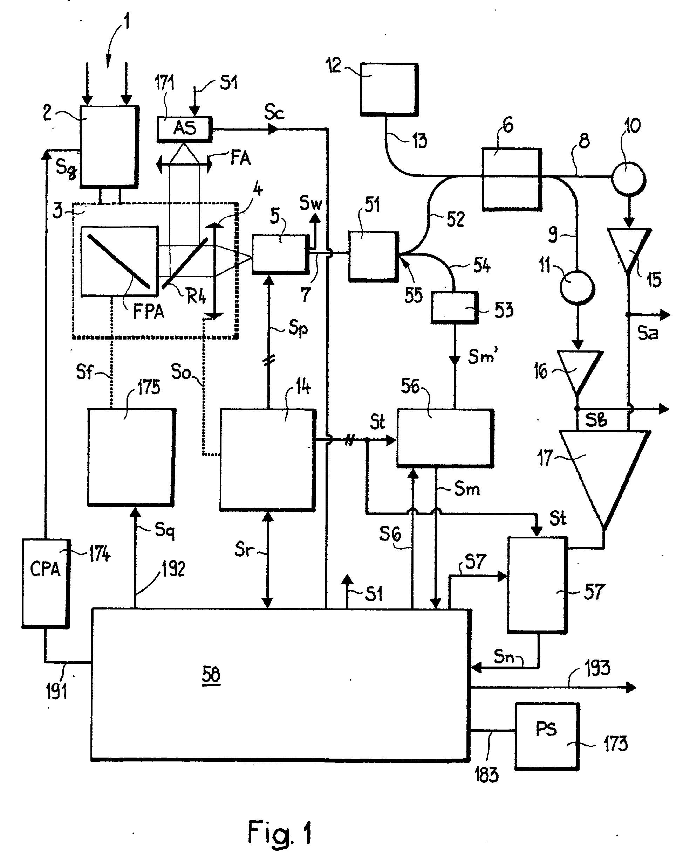

Ähnlich wie bei der aus der erwähnten **EP-0 831 604-A1** bekannten Vorrichtung wird gemäss **Fig. 1** eine ein Datensignal tragende **Rx**-Welle oder Informationslichtwelle **1** über eine Empfangseinheit bestehend aus einem Empfangsteleskop **2,** einem Feinausrichtmechanismus **3** und einer Linse **4** empfangen. Die Welle **1** enthält auch Beaconlicht, das nicht scharf gebündelt sondern in einem relativ breiten Winkel ankommt.

Im Gegensatz zur erwähnten Vorrichtung wird nach der vorliegenden Erfindung die empfangene Lichtwelle **1** über einen Fibernutator **5** einem Lichtwellenleiter-Koppler **6** zugeführt. An den Fibernutator **5** kann ein Ende einer polarisations-erhaltenden Monomode-Faser **7** angeschlossen sein, um die über die optische Empfangseinheit empfangene Strahlung bis zum **LWL**-Koppler **6** und über weitere Monomode-Fasern **8** und **9** bis zu je einem Detektor **10** bzw. **11** zu führen. Nach der vorliegenden Erfindung wird vorzugsweise die über die optische Empfangseinheit empfangene Strahlung jedoch über einen chromatischen Diplexer **51** und eine Monomode-Faser **52** für Datenlicht bis zum **LWL**-Koppler **6** geführt. Ein solcher Fibernutator **5** ist im wesentlichen eine Ablenkeinheit mit einer Faser, die beispielsweise durch einen Piezomechanismus zur Nutantion angetrieben wird. An einen lokalen Laser **12** ist eine weitere vorzugsweise polarisationser-haltende Monomode-Faser **13** angeschlossen, um die vom lokalen Laser **12** erzeugte Strahlung bis zum **LWL**-Koppler **6** und dann über die Monomode-Fasern **8** und **9** bis zu den zwei Detektoren **10** bzw. **11** zu führen. Die Detektoren **10** und **11** müssen nicht wie bei der bekannten Vorrichtung gesplittet sein. Die Ablenkeinheit **5** kann über einen Bus oder Leitungen Steuersignale **Sp** von einer Ansteuerung **14** erhalten. Der **LWL**-Koppler **6** ist vorzugsweise ein **50**%-zu-**50**%-Koppler. Ein einfacher und gleichzeitig inhärent langzeitstabiler Aufbau kann mit einem polarisationserhaltenden Faserkoppler erreicht werden.

Als Ablenkeinheit kann auch an Stelle des mechanischen Fibernutators ein elektrooptischer Deflektor verwendet werden, bei dem eine elektrische Spannung einen linearen elektrischen Feldgradienten über die Apertur eines elektrooptischen Kristalls erzeugt. Bei einem solchen Deflektor ist auch eine Apertur von etwa **1** mm ohne weiteres erreichbar.

Die Detektoren **10** und **11** liefern über je einen Verstärker **15** bzw. **16** Signale **Sa** bzw. **Sb,** die als Nutzsignale verwendet werden. Der niederfrequente Anteil dieser Signale **Sa** und **Sb** wird auch den Differenzeingängen eines Differenzverstärkers **17** zugeführt. Die erfindungsgemässe Vorrichtung umfasst zusätzlich einen Sensor **53,** der über eine Faser **54,** vorzugsweise eine Monomode-Faser, mit dem Ausgang des Diplexers **51** verbunden ist, sowie zwei Diskriminatoren **56, 57,** eine übergeordnete Systemsteuerung **58** und eine **CPA**-Einheit (Coarse Pointing Assembly) **174.** Der Sensor oder Detektor **53,** der schneller als der Akquisitionssensor **171** ist, kann beispielsweise eine Photodiode sein. Die Diskriminatoren **56** und **57,** die Synchrondemodulatoren und Verstärker sein können, sind eingangsseitig mit je einem Ausgang des Sensors **53** bzw. des Verstärkers **17** verbunden. Im Feinausrichtmechanismus **3** ist auch eine als Strahlteiler wirkende Reflexionsfläche **R4** vorhanden, um die Strahlung abzulenken, die dann über eine vorzugsweise fest montierte Fokussiereinrichtung **FA** zu einem Akquisitions-Sensor (**AS**) **171** gelangt, wie er ohnehin, jedoch in einer anderen Form in Vorrichtungen dieser Art vorhanden ist. Der Sensor **171** ist ein grossflächiger Matrix-Sensor mit einer Fläche von beispielsweise 6 x 8 mm², der abgetastet wird und daher langsam ist. Die Systemsteuerung **58** ist eingangsseitig mit Ausgangssignalen **Sc, Sm** und **Sn** des Sensors **171** bzw. der Diskriminatoren **56, 57** beaufschlagt.

Die Systemsteuerung **58** weist verschiedene Ausgänge auf, um über Leitungen **191, 192, 193** Signale an je eine CPA-Einheit **174,** eine FPA-Steuerungselektronik **175** bzw. eine PAA-Einheit zu liefern, und ist zudem bidirektional mit der Steuereinheit **14,** die auch Deflektor-Aussteuerung genannt wird, verbunden. Dabei wird das Empfangsteleskop **2** durch ein Ausgangssignal **Sg** der CPA-Einheit **174,** der Feinausrichtmechanismus **3** durch ein Regelsignal Sf der Einheit **175** und die Linse **4**, die Ablenkeinheit **5** und die Diskriminatoren **56, 57** durch Signale **So, Sp** bzw. **St** (**Fig. 1**) gesteuert. Die Signale **Sp** und **St** sind Quadratursignale (sinωt, cosωt), wie sie beispielsweise zur Erzeugung von Lissajousschen Figuren verwendet werden.

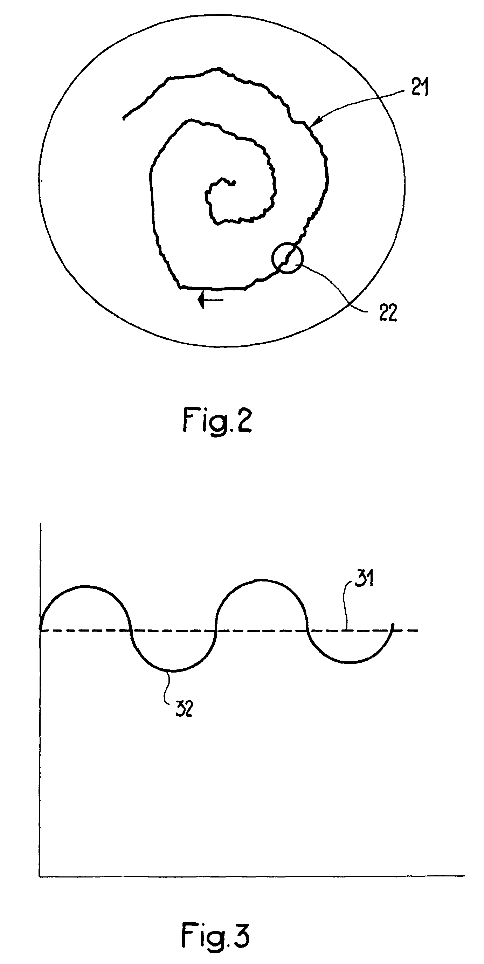

**Fig. 2** zeigt, wie sich ein durch diese geregelte Bewegung **21** geführter Lichtfleck **22** auf eine diametrale Fläche am Ende der Lichtwellenfaser der Ablenkeinheit **5** projiziert. Durch die Regelung kann der Lichtfleck **22** zumindest angenähert bis zum Zentrum der Lichtwellenfaser gebracht werden.

**Fig. 3** zeigt wie das mittlere Intensitätssignal **31** auf den Detektoren **10** und **11** ein überlagertes Modulationssignal **32** aufweist, wenn die Faserachse nicht konzentrisch um die optische Achse des optomechanischen Systems scannt. Die Aufgabe der Systemsteuerung **58** besteht darin, den Feinausrichtmechanismus **3,** das Ende der Faser **7** und/oder die Linse **4,** derart zu bewegen, dass dieses Modulationssignal **32** einen minimalen Wert oder den Wert Null erreicht.

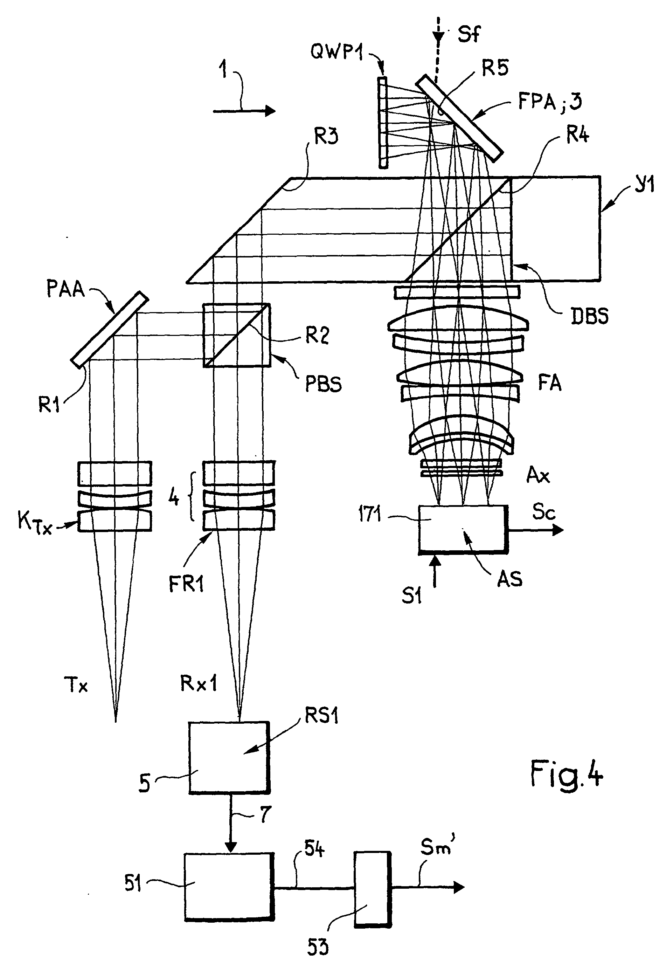

Wie aus Fig. **4** ersichtlich kann ein Terminal für drei Kanäle vorgesehen sein, nämlich für einen Sendekanal **Tx,** für einen Empfangskanal **Rx1** mit einem Fibernutator **5** (**Fig. 1** und **4**), der als Empfangssensor **RS1** betrachtet wird, und für einen Akquisitionskanal **Ax** mit einem Akquisitionssensor (**AS**) **171** (**Fig. 4** und **1**).

Gemäss **Fig. 4** sind im Sendekanal **Tx** in Strahlrichtung gesehen, eine Kollimatorvorrichtung **KTX** , eine erste Reflexionsfläche **R1,** eine zweite Reflexionsfläche **R2,** eine dritte Reflexionsfläche **R3,** eine vierte Reflexionsfläche **R4,** eine fünfte Reflexionsfläche **R5** und eine Viertelwellenplatte (Quarter Wave Plate) **QWP1** angeordnet. Die erste Reflexionsfläche **R1** ist Bestandteil einer Vorhalte-Vorrichtung (Point Ahead Assembly) **PAA.** Die zweite Reflexionsfläche **R2** ist Bestandteil eines polarisierenden Strahteilers (Polarizing Beam Splitter) **PBS,** welcher so ausgebildet ist, dass er für Strahlen mit der Polarisation des Sendestrahls reflektierend und für Strahlen mit der Polarisation des Empfangsstrahls möglichst verlustfrei durchlässig ist. Die vierte Reflexionsfläche **R4** wird beispielsweise durch einen dichroitischen Strahlteiler (Dichroitic Beam Splitter) **DBS** gebildet. Die fünfte Reflexionsfläche **R5** wird durch eine Feinziel-Vorrichtung (Fine Pointing Assembly) **FPA** gebildet (**Fig. 4** und **1**)**.** Die Viertelwellenplate **QWP1** verwandelt das bis anhin linear polarisierte Licht des Sendekanals für die Übertragung im Weltraum zum Partnerterminal in zirkular polarisiertes Licht.

Der Empfangskanal **Rx1** umfasst, ebenfalls in Strahlrichtung gesehen, die Viertelwellenplatte **QWP1,** die fünfte Reflexionsfläche **R5**, den dichroitischen Teiler **DBS,** die dritte Reflexionsfläche **R3,** den reflektierenden Strahlteiler **PBS,** eine Fokussiereinrinchtung **FR1** und den Fibernutator **5** bzw. den Empfangssensor **RS1.** Die Viertelwellenplatte **QWP1** verwandelt das durch den Weltraum ankommende zirkular polarisierte Licht des Partnerterminals in linear polarisiertes Licht.

Der Strahlteiler **PBS** hat die Differenzierung von Sende- und Empfangsstrahl zum Zweck. Er wird beim vorliegenden Ausführungsbeispiel bzw. in Fällen benötigt, in welchen sich Sende-und Empfangsstrahl durch unterschiedliche Polarisation unterscheiden. In anderen Ausführungsbeispielen, in welchen sich Sende- und Empfangsstrahl beispielsweise durch unterschiedliche Wellenlängen unterscheiden, würde anstelle des **PBS** ein **DBS** verwendet.

Der Sendekanal dient zum Übertragen von Daten an das Partnerterminal, und der Empfangskanal dient zum Empfangen von Daten vom Partnerterminal, jeweils in einem Betriebsmodus, in welchem beide Terminals schon grob aufeinander ausgerichtet sind. Zur Grobausrichtung dient die Grobausricht-Vorrichtung **174** (**Fig. 1, CPA,** Coarse Pointing Assembly); diese umfasst einerseits eine am Partnerterminal angeordnete Lichtbake zum Emittieren eines Bakenlichtes und andererseits den Akquisitionskanal am Terminal zum Empfangen des Bakenlichtes. Der Akquisitionskanal trennt sich beim dichroitischen Teiler **DBS** vom Empfangskanal **Rx** und weist eine Fokussiereinrichtung **FA** (**Fig. 4**) sowie den Akquisitions-sensor **AS** auf. Der Erfassungsbereich **AA** des Akquisitionssensors **AS** ist bedeutend grösser als der Erfassungsbereich **RA** des Empfangssensors.

Die erfindungsgemässe Vorrichtung funktioniert folgendermassen: Die Lichtwelle **1** umfasst den Daten übertragenden Kommunikationsstrahl, auch Datenlicht genannt, und Beaconlicht. Das Datenlicht ist stark gebündelt und kann wegen der sich in der Akquisitionsphase ergebenden "Wackelei" sehr wahrscheinlich die Gegenstation nicht treffen. Der Beaconstrahl ist weniger gebündelt, was eine permanente Beleuchtung der Gegenstation ermöglicht. Man hat also zunächst die Möglichkeit mit dem Akquisitions-Sensor **171** auf das empfangene Beaconlicht zu tracken. Gleichzeitig kann man mit dem Lecklicht versuchen, auf den Nutator **5** überzugehen. Da dies alles bei permanenter Beleuchtung durch die Gegenstation geschieht, tritt kein "Twinkling"-Effekt auf, wie wenn man den Kommunikationsstrahl benutzen würde. Man hat also Zeit, falls man nicht sofort den Fibernutator trifft, den Lichtspot zu suchen.

Die von der optischen Empfangseinheit **2, 3** (**Fig. 1)** bzw. von den **Elementen FPA, R4, R3, PBS** und **FR1** (**Fig. 4**) empfangene Lichtwelle wird über die Feinausrichteinheit **3** und mit Hilfe der Linse **4** bzw. der Elemente **PBS, FR1** (**Fig. 4**) etwa auf das Zentrum der Monomode-Faser **7 (Fig. 1**) im Fibernutator **5 (Fig. 1, 4**) fokussiert, wenn die Steuereinheit ruht. Wenn die Steuereinheit **14** (Fig. **1)** aktiv ist, wird durch den Fibernutator **5** eine Bewegung **(Fig. 2**) des Faserendes **22** um das Zentrum der Monomode-Faser **7** bewirkt. Vorzugsweise beschreibt das Faserende **22** eine hochfrequente Kreisbewegung um die optische Achse der Empfangsoptik. Obwohl das Ende der Faser **7** durch den Nutator bewegt wird, hat man am Ende der Faser, bei den Detektoren **10** und **11** keine räumliche Bewegung des austretenden Lichts mehr. Vielmehr verursacht die Rotationsbewegung mittels des Nutators **5** eine Intensitätsmodulation (**Fig. 3**) falls die Scanbewegung nicht exakt konzentrisch um den Lichtfleck erfolgt.

Die durch den Nutator **5** (**Fig. 1, 4**), der allgemein eine Ablenkeinheit sein kann, bewirkte hochfrequente mechanische Scanbewegung des Faserendes kann beispielsweise mittels eines Lateralverschiebemechanismus oder mittels eines Biegeelements gesteuert werden. Schnelle Lateralschiebe-Einheiten mit kleinen Bewegungen sind beispielsweise aus optoelektronischen Lese-geräten wie CD-Spielern bekannt. Biegeelemente lassen sich dagegen einfach aus piezokeramischen Röhrchen mit segmentierten Elektroden realisieren. Diese Röhrchen sind nur in einem Bereich fest fixiert, damit sie sich durch den Piezoeffekt in Längsrichtung biegen können. Allen Mechanismen gemeinsam ist, dass sie über sogenannte I-Q-Signale angesteuert werden. Nach erfolgter 1-Q-Demodulation des Intensitätssignals erhält man schliesslich den räumlichen Fehler zwischen dem Lichtfleck **22** und der Faserachse. Die Fehlersignale **Sm** und **Sn** (**Fig. 1**) bewirken über die Systemsteuerung **58,** dass der Ablagefehler minimiert wird.

Der durch die Rotationsbewegung erzeugte relative Versatz zwischen der Intensitätsverteilung des Rx-Lichts in der Fokalebene der Linse **4** und dem Ende der Faser **7** bewirkt somit ein zeitlich asymmetrisches Intensitätssignal auf den Detektoren **10** und **11,** falls die Faserachse nicht konzentrisch um die optische Achse des optomechanischen Systems scannt. Der abtastende Punktdetektor wird somit, und zwar mit sehr guter Näherung, durch das Modenfeld einer monomodigen Faser ersetzt. Um einen zu hohen Signalabfall des in die Faser eingekoppelten Lichts zu vermeiden, sollte der Scanradius 1/10 des Modenfeld-Radius nicht überschreiten.

Die über den chromatischen Diplexer **51** geführte Lichtwelle wird durch den Strahlteiler **6** in zwei nahezu identische Teilstrahlen aufgeteilt, die je einem der Detektoren **10** und **11** zugeführt werden, nachdem über den **LWL**-Koppler **6** das Licht des lokalen Lasers **12** in den Lichtstrom eingekoppelt wurde. Von den zwei Detektoren **10, 11,** werden je zwei Fehleranteilsignale erzeugt, die je über einen entsprechenden Front-End-Transimpedanz-Verstärker **15** bzw. **16** in Spannungen **Sa** bzw. **Sb** umgesetzt werden. Aus den Signalen **Sa** und **Sb** wird durch Differenzbildung ein räumliches Fehlersignal gewonnen, das als Signal Sn(Δx, Δy) am Ausgang der Schaltung **57** erscheint und für den Tracking-Dauerbetrieb verwendet wird. Durch vorzeichengerechte Addition der Fehleranteilsignale **Sa** und **Sb** ergibt sich andererseits ein dem ursprünglichen Daten- oder Kommunikationssignal entsprechendes Ausgangssignal. Durch die Erfindung wird daher ein in solchen Vorrichtungen neben einem Akquisitionssensor **AS** und einem Pointing-Sensor **173** vorhandener Trackingsensor (**TS**) ersetzt.

Die Überlagerung der Lokal-Laser-Welle mit der **Rx**-Welle erfolgt erst in der Glasfaser, so dass der räumliche Korrelationsgrad zwischen Lokal-Laser und **Rx**-Feld gleich **1** sein wird, das heisst, es erfolgt garantiert streifenfreie Überlagerung. Für die Optimierung bei der Justage bzw. für eine spätere Optimierung im Betrieb kann man dann von einer garantiert streifenfreien Überlagerung ausgehen und auf das absolute Amplitudenmaximum justieren. Dies erweist sich als sehr vorteilhaft gegenüber der Freistrahlüberlagerung, bei der es im Gegensatz zum erfindungsgemässen Verfahren vorkommen kann, dass bei der Überlagerung der beiden Wellen noch Interferenzstreifen infolge eines Kippwinkels auftreten. Der optimale, das heisst streifenfreie Justierzustand kann dann nicht mehr durch das Intensitätsmaximum alleine gefunden werden. Zudem ist dann der Pegelabstand zwischen dem Hauptmaximum und einem der Nebenmaxima relativ klein. Es besteht dann immer die latente Gefahr, dass der Trackingregler aus dem Tritt gerät und auf einem Nebenmaximum der Intensitätsverteilung regelt, was den linearen Regelbereich dann erheblich einschränkt.

Die bisher bekannten Fibernutationsanwendungen setzen einen kohärenten optischen Überlagerungsempfang voraus. Der Grund hierfür ist in erster Linie die damit erzielbare gute Unterdrückung von Störlichteinflüssen. Während der Akquisitionsphase, bei der eine optische Übertragungsstrecke aufgebaut wird, befinden sich jedoch keine störenden natürlichen Lichtquellen im Gesichtsfeld der Akquisitionssensoren, so dass sich die Fibernutatoren erfindungsgemäss ebenfalls in der Akquisitionsphase bereits einsetzen lassen, obwohl noch kein Überlagerungsempfang stattfindet.

Da die Fibernutatoren aufgrund ihrer Einmodigkeit ein selektiv kleines Gesichtsfeld aufweisen, lassen sich damit sehr hohe Raumwinkelauflösungen erzielen (Submikro-Radianten). Zudem ist der Strahl des Beaconlasers nicht so stark gebündelt wie der Kommunikationsstrahl, es ist daher bereits mit der Weitwinkelkamera möglich, eine permanente Beleuchtung der Gegenstation sicherzustellen.

Während der Akquisitionsphase wird das Licht des oder der Beaconlaser, welches z.B. von leistungsstarken Laserdioden stammt, in Multimodifasern eingekoppelt. Der Polarisationszustand des abgestrahlten Lichts ist somit zufällig. Auf der Empfangsseite (**Fig. 4**) treten daher bei der chromatischen Trennung (**R4**) von Beacon- und Kommunikationslichtwellenlängen inhärent "hohe" Verluste auf. Die benutzten Diplexer **R4** werden auf niedrige Übertragungsveriuste für das Kommunikationslicht optimiert. Folglich tritt in Bezug auf das Beaconlicht immer ein "Übersprechen" der Beaconwellenlänge in den Kommunikationskanal auf, das heisst, dass Beaconlicht empfangsseitig in Richtung des Kommunikations-Empfängers gelangt. Dank dem Faserfrontend, das man erfindungsgemäss nach dem Fibemutationsprinzip in den Kommunikationsempfängern benutzt, hat man die Möglichkeit das Lecklicht aus dem Akquisitionskanal ebenfalls zur Generierung von Trackingsignalen zu benutzen.

Der Akquisitions-Sensor **171** und die Coarse Pointing Assembly **174** arbeiten in an sich bekannter Weise. Man hat also zunächst bzw. am Anfang die Möglichkeit, mit Hilfe des Signals Sc auf das empfangene Beaconlicht zu tracken, wobei ersatzweise für Tracking eine Regelschleife über die Elemente **58, 174, 2, FPA, R4, 171** benutzt wird, die, durch den Sensor **171** bedingt, eine langsame Regelbandbreite, beispielsweise in der Grössenordnung von 50 **Hz** aufweist.

Das Signal **Sn** am Ausgang des Diskriminators **57** wird grundsätzlich von der Systemsteuerung **58** im Tracking-Dauerbetrieb benutzt. In diesem Fall wirkt eine innere durch die Elemente **57, 58, 175, 3, 51** und **6** bestimmte Regelschleife. Zudem wirkt auch eine äussere durch die Elemente **58, 174** und **2** bestimmte Regelschleife. Diese Regelschleifen sind sehr schnell ist, weil die Sensoren **10, 11** und **53,** die sozusagen Punktsensoren in Kombination mit einer Glaserfaser darstellen, viel schneller als der Sensor **171** arbeiten können. Das Signal **Sm** am Ausgang des Diskriminators **57** wird hingegen nur temporär, und zwar nur am Anfang benutzt, gegebenenfalls während einer maximalen Zeit von beispielsweise drei Minuten. Die Systemsteuerung **58** hat Mittel, um festzustellen, ob die Signale **Sc, Sm** und **Sn** brauchbar sind. Da das Beaconlicht in einem relativ breiten Winkel empfangen wird, ist der Empfang für das Signal **Sc** unproblematisch. Am Anfang wird daher dieses Signal **Sc** benutzt, bis die Systemsteuerung **58** feststellt, ob das Signal **Sm** brauchbar ist, das heisst, ob der Fibernutator genug Lecklicht zur Generierung von Trackingsignalen bekommt oder nicht. Ab diesem Moment arbeitet sie mit diesem Signal **Sm,** wobei man aus Sicherheitsgründen den Sensor **171** in der Akquisitionsphase weiter laufen lassen kann. Wenn danach die Systemsteuerung **58** feststellt, dass das Signal **Sn** gültig ist bzw. dass der Kommunikationskanal richtig läuft, übernimmt sie dieses Signal **Sn** für einen genaueren Tracking-Dauerbetrieb. In diesem Moment kann man durch ein Enable-Signal **S6** das Signal Sm des Diskriminators **56** abschalten sowie spätestens jetzt durch ein Enable-Signal **S1** auch das Signal **Sc** ausschalten. Diese Enable-Signale **S1** und **S6** sowie ein weiteres Enable-Signal **S7** für den Diskriminator **57** werden in der Systemsteuerung **58** erzeugt, die die Signale **Sc, Sm** und **Sn** zugleich zur Steuerung der **CPA** und der **FPA** benötigt. Die Ansteuerung **14** hingegen läuft immer, beispielsweise mit Hilfe eines Taktgebers.

Das erfindungsgemässe Prinzip gilt auch für inkohärente Systeme. Inkohärente Systemrealisierungen oder direkte Detektionssysteme werden manchmal derartig realisiert, dass das ankommende Licht der Gegenstation auf eine sogenannte Lawinendiode fokussiert wird. Derartige Systeme sind inhärent nicht einmodige Empfänger. Das heisst, der Empfänger akzeptiert Licht aus einen Raumwinkelbereich, der grösser als der durch die Beugungstheorie beschriebene Raumwinkelbereich für beugungsbegrenzte Systeme ist. Zur Minimierung der störenden Hintergrundstrahlung müssen dann extrem schmalbandige optische Filter eingesetzt werden. Die Realisierung solcher Filter für Langzeit-Raumfahrt-Anwendungen ist bis heute nicht gelöst.

Zur Verfolgung der Gegenstation wird gewöhnlicherweise ein separater Trackinglaser benutzt. Diese Laser zeichnen sich dadurch aus, dass sie eine gute Wellenlängenstabilisierung besitzen. Bei der Empfangsstation werden der Empfangsdiode wiederum extrem schmalbandige optische Filterelemente vorgeschaltet (oftmals sogenannte "atomic line filter"). Der Aufwand baulicher Art für derartige Systemrealisierungen lässt sich signifikant reduzieren durch den Einsatz einmodiger Empfängereinheiten. Dies führt schliesslich zu einer Ersparnis an Komplexität, Leistungsbedarf und Masse. Durch den Einsatz des einmodigen Frontends lässt sich der räumliche Akzeptanzbereich des Empfängers auf das Beugungslimit zurückführen. Dies führt zu einer erheblichen Reduktion der auf dem Empfänger gelangenden Hintergrundstrahlung. In der Folge können die Anforderungen an die verwendeten optischen Bandpassfilter deutlich entspannt werden.

Des weiteren lässt sich mit dem Einsatz von einmodigen Empfängern die Streulichtunterdrückung (Übersprechen des Sendekanals) auf dem Empfangskanal in erheblichem Masse reduzieren. Mit dieser Art von Empfängern sind Unterdrückungsverhältnisse von mindestens 50 dB realisierbar, die mit Bandpassfiltem nur unter erheblichem Aufwand erzielt werden können. Kann auf ca. 5% der empfangenen Leistung im Kommunikationskanal verzichtet werden, so ist man in der Lage vollständig auf das zusätzliche Trackingsystem zu verzichten. Der Einsatz eines Einmoden-Empfängermoduls in Kombination mit einem räumlichen Suchverfahren, z.B. Fibernutationsprinzip, erlaubt diese Realisierung. Dieser Sachverhalt ist in **Fig. 1** durch eine mögliche zusätzliche Verbindung zwischen einem weiteren Ausgang des Fibernutators **5** für ein Signal **Sw** und der Einheit angedeutet, in der sich die Linse **4** befindet, um diese zu steuern. Dies bedeutet, dass man erfindungsgemäss dieses zusätzliche Ausgangssignal **Sw** des Fibernutators **5** zur direkten Steuerung der **FPA 3** verwenden kann.

Durch die Verwendung der Empfangsfaser **7**, die relativ lang sein kann, ist es möglich, das Receiver-Front-End **(RFE),** das heisst die Detektoren **10, 11** und die Verstärker **15, 16** in einer relativ weiten Entfernung von der Optik unterzubringen. Zu diesem Zweck können die Lichtwellenfasern in einem flexiblen Schutzkabel untergebracht sein oder eine flexible Ummantelung aufweisen. Die im **RFE** entstehende Wärme ist somit optimal von der Optik abgekoppelt, und es muss nicht mehr mit durch das **RFE** induzierten thermischen Dejustierungen im optischen Subsystem gerechnet werden. Die optischen Teile **2, 3, 4** und **5** können somit auch in einem relativ grossen Abstand zur Datenelektronik und zum **RFE** angeordnet werden, die sich in der abgesetzten Elektronik-Einheit befinden. Durch die Beweglichkeit von Teilen der Faser lassen sich somit sämtliche Probleme beseitigen, die sich bei Verwendung von langen Mikrowellenleitungen (Dämpfung, **EMC** (Electromagnetic Compatibility)) ergeben, auch wenn man dann eine Koaxleitung von der Elektronik-Einheit zum optischen Kopf führen muss, um auf dieser Leitung die niederfrequenten Trackingfehlersignale (**BW** ≈ 10 kHz) wieder nach vorne zu führen.

Die erfindungsgemässe Vorrichtung erweist sich zudem als besonders vorteilhaft im Hinblick darauf, dass sie eine hohe Langzeitstabilität aufweist, dass sie mit einem relativ einfachen Algorithmus bei der Strahlüberlagerung optimiert werden kann, dass sich bei hochfrequenten Datenströmen (Taktrate = 1000 Mbps) keine besonders signifikante Dämpfung auf die Verbindungs-leitung zwischen dem Fibernutator und dem abgesetzten Receiver-Front-End (**RFE**) (Kabellängen > 3 m) ergibt, dass sie keiner zusätzlichen Leitungs-Treiberelektronik bedarf, dass die Kabel nicht fix verlegt werden müssen, so dass auch bewegliche Teilbereiche möglich sind, dass sie bezüglich **EMC**-Störungen unproblematisch ist, dass bei Breitbandsystemen RFEs mit Bandbreiten >> 1 Ghz zum Einsatz kommen können, und dass eine hohe Wärmeentwicklung infolge der HF-Elektronik in unmittelbarer Nähe der Optik vermieden wird. In diesem Sinne kann die Vorrichtung nach der vorliegenden Erfindung in vorteilhafter Weise die Elemente **16** und **26** der optischen Bank nach der erwähnten Offenlegungsschrift **EP- 0 844 473 A1** ersetzen.

Bei einer Ausführung der Erfindung kann die Systemsteuerung **58** und/oder die Ansteuerung **14** derart ausgebildet sein, dass eine Bewegung des beweglichen Endes der Lichtwellenfaser **7** um das Zentrum des fokussierten Punktes **22** der Informationswelle 1 bei ruhender Linse **4** bewirkt wird.

Bei einer anderen Ausführung der Erfindung kann die Systemsteuerung **58** eine Bewegung der Linse **4** bewirken, um den fokussierten Lichtfleck **22** der Informationswelle **1** um das Zentrum der Lichtwellenfaser **7** bei ruhender Lichtwellenfaser zu bewegen.

Die Vorrichtung nach der vorliegenden Erfindung kann für denselben oder ähnliche Zwecke wie bei der erwähnten Patentanmeldung **EP 0 831 604 A1** verwendet werden.

In einem solche System können im Sender ein optischer Wanderwellen-Verstärker, beispielsweise ein optischer Halbleiterverstärker, ein Erbium-dotierter Faserverstärker oder ein Nd- oder Yb-dotierter Faserverstärker vorhanden sein. Zur Unterdrückung von störendem Hintergrundlicht kann eine räumliche Filterung mittels optischer Monomode-Wellenleiter (**6**) vorgesehen sein.

Die oben dargelegten Ausführungsbeispiele sind lediglich als Veranschaulichung der Anwendung einer solchen Vorrichtung zu verstehen. Andere sich für Fachleute sofort daraus ergebende Ausführungen beinhalten jedoch auch die Grundgedanken der Erfindung.

## Patentansprüche

1. Verfahren zum Verbindungsaufbau zwischen einem Empfänger und einem sich entfernt von ihm befindenden Sender mittels Datensignale und Beaconlicht tragender Lichtwellen (1), wobei zur Akquisition der Lichtwellen im Empfänger ein Akquisitionssensor (171) vorhanden ist, der aus den empfangenen Lichtwellen Akquisitionssensorsignale (Sc) erzeugt,
**dadurch gekennzeichnet,**
- **dass** die über ein Empfangsteleskop (**2**) und einen Strahlteiler (**R4**) geführten Lichtwellen (1) sowohl dem Akquisitionssensor (**171**) als auch einer als einer Ablenkheit dienander Scanvorrichtung (**5**) zugeführt werden, und
- **dass** mit Hilfe der Scanvorrichtung (**5**) neben einem Nutzsignal (Sa;Sb;Sn) auch ein zusätzliches Signal (Sw) gewonnen wird, das zur Erleichterung der Akquisition dient.

2. Verfahren nach Anspruch 1,
**dadurch gekennzeichnet,**
- **dass** Licht aus der Scanvorrichtung (**5**) über eine erste Lichtwellenfaser (**7**) zu einem Diplexer (**51**) geführt wird, und
- **dass** von diesem Diplexer (**51**) abgezweigtes Licht über eine zweite Lichtwellenfaser (**54**) einem Detektor (**53**) zugeführt wird, der das zusätzliches Signal zur Erleichterung der Akquisition liefert.

3. Verfahren nach Anspruch **2**,
**dadurch gekennzeichnet,**
**dass** bei kohärentem Überlagerungsempfang auch Licht, das über die erste Lichtwellenfaser (**7**) und den Diplexer (**51**) ankommt, zu einem Lichtwellenleiter-Koppler (**6**) geführt wird, in dem die-ses Licht und über eine dritte Lichtwellenfaser (**13**) geführtes Licht eines lokalen Lasers (**12**) gemischt werden, wobei das gemischte Licht in zwei Teile aufgeteilt wird, die über je eine weite-re Lichtwellenfaser (**8** bzw. **9**) zu je einem weiteren Detektor (**10** bzw. **11**) zur Erzeugung mindestens eines Fehlersignals (Sn) gelangen.

4. Vorrichtung zur Durchführung des Verfahrens nach einem der Ansprüche **1** bis **3**,
**dadurch gekennzeichnet,**
- **dass** die Vorrichtung ein Empfangsteleskop (**2**) und einen Feinausrichtmechanismus (**3**) mit einem Strahlteiler (R**4**) umfasst, der ausgebildet ist, um über optische Mittel (**4**; FA) sowohl einem Akquisitionssensor **(171)** als auch einer als einer Ablenkeinheit dienender Scanvorrichtung (5) Licht zuzuführen, und
- **dass** mit Hilfe der Scanvorrichtung (**5**) neben einem Nutzsignal **(Sa; Sb; Sn)** auch ein zusätzliches Signal (**Sw**) gewonnen wird, das unabhängig von oder zusammen mit dem Akquisitionssensorsignal (Sc) in der Akquisitionsphase wirksam ist.

5. Vorrichtung nach Anspruch **4**,
**dadurch gekennzeichnet,**
**dass** die Scanvorrichtung (**5**) über eine erste Lichtwellenfaser (**7**) mit einem Diplexer (**51**) verbunden ist, dem über eine zweite Lichtwellenfaser (**54**) ein Detektor (**53**) nachgeschaltet ist, der ein zusätzliches Signal **(Sm)** zur Erleichterung der Akquisition liefert.

6. Vorrichtung nach Anspruch **5**,
**dadurch gekennzeichnet,**
**dass** sie einen eingangsseitig über eine dritte Lichtwellenfaser (**52**) mit dem Diplexer (**51**) verbundenen Lichtwellenleiter-Koppler (**6**) umfasst, der ausgestaltet ist, um bei kohärentem Überlagerungsempfang über den Diplexer (**51**) ankommendes Licht und über eine vierte Lichtwellenfaser (**13**) geführtes Licht eines lokalen Lasers (**12**) zu mischen und um das gemischte Licht in zwei Teile aufzuteilen, die über je eine weitere Lichtwellenfaser (**8** bzw. **9**) zu je einem weiteren Detektor (**10** bzw. **11**) zur Erzeugung mindestens eines Fehlersignals (**Sn**) gelangen.

7. Vorrichtung nach Anspruch **5** oder **6**,
**dadurch gekennzeichnet,**
**dass** der erste Detektor (**53**) mit einem Diskriminator (**56**) verbunden ist, der das zusätzliche Signal (Sm) an eine Systemsteuerung (**58**) liefert.

8. Vorrichtung nach Anspruch **6** oder **7**,
**dadurch gekennzeichnet,**
**dass** ein weiterer den zwei weiteren Detektoren (**10** bzw. **11**) nachgeschalteter Diskriminator (**57**) vorhanden ist, der dieses mindestens eine Fehlersignal (**Sn**) an eine Systemsteuerung (**58**) liefert.

9. Vorrichtung nach Anspruch **6** oder **7**,
**dadurch gekennzeichnet,**
**dass** die Scanvorrichtung (**5**) an eine Ansteuerung (**14**) angeschlossen ist, die Kommandosignale (**St**) für mindestens einen der Diskriminatoren (**56, 57**) liefert.

10. Vorrichtung nach einem der Ansprüche **4** bis **9**,
**dadurch gekennzeichnet,**
**dass** das Empfangsteleskop (**2**) und/oder eine im Feinausrichtmechanismus (**3**) enthaltene **FPA**-Einheit über eine **CPA**-Steuerung (**174**) bzw. über eine **FPA**-Steuerung (**175**) an die Systemsteuerung (**58**) angeschlossen ist.

## Claims

1. Method for establishing a connection between a receiver and a transmitter, located at a distance from it, by means of lightwaves **(1)** carrying data signals and beacon light, whereby an acquisition receiver **(171)** for acquiring the lightwaves is provided in the receiver, which generates acquisition sensor signals (**Sc**) from the received lightwaves,
**characterized in**
- **that** the lightwaves **(1)** directed via a receiver telescope **(2)** and a beam splitter **(R4)** are fed to the acquisition sensor **(171**), as well as to a scanning device **(5)** serving as a deflecting unit, and
- **that** besides a useful signal (**Sa; Sb; Sn**), by means of the scanning device **(5)** also an additional signal **(Sw)** is obtained, which is used to make the acquisition easier.

2. Method according to claim **1**,
**characterized in**
- **that** light from the scanning device **(5)** is directed via a first lightwave fiber **(7)** to a diplexer **(51),** and
- **that** light split off from this diplexer **(51)** is directed to a detector **(53)** via a second lightwave fiber **(54),** which provides the additional signal for making the acquisition easier.

3. Method according to claim **2**,
**characterized in**
**that** by coherent heterodyne reception light, which arrives via the first lightwave fiber **(7)** and the diplexer **(51),** is also directed to an optical waveguide coupler **(6),** in which this light and light from a local laser **(12)** directed through a third lightwave fiber **(13),** are mixed, whereby the mixed light is split into two parts each of which reaches a further detector (**10** or **11**) via a respective further lightwave fiber (**8** or **9**) for generating at least one error signal **(Sn).**

4. Device for executing the method according to one of claims **1** to **3**,
**characterized in**
- **that** the device comprises a receiver telescope **(2)** and a fine alignment mechanism **(3)** with a beam splitter **(R4),** which is designed to provide light via optical means to an acquisition sensor **(171),** as well as to a scanning device **(5)** serving as a deflecting unit, and
- with the aid of the scanning device (**5**), besides a useful signal (**Sa; Sb; Sn**), also an additional signal **(Sw)** is obtained, which is independently of or together with the acquisition sensor signal **(Sc)** effective in the acquisition phase.

5. Device according to claim **4**,
**characterized in**
**that** the scanning device **(5)** is connected via a first lightwave fiber **(7)** with a diplexer **(51),** downstream of which a detector **(53)** is connected via a second lightwave fiber **(54),** which provides an additional signal **(Sm)** for making the acquisition easier.

6. Device according to claim **5**,
**characterized in**
**that** it comprises an optical waveguide coupler **(6),** whose input side is connected via a third lightwave fiber **(52)** with the diplexer **(51),** which is designed for mixing light arriving from the diplexer **(51)** and light from a local laser **(12)** directed via a fourth lightwave fiber **(13)** during coherent heterodyne reception, and to split the mixed light into two parts, which reach a further detector **(10** or **11)** via a respective further lightwave fiber **(8** or **9)** for generating at least one error signal **(Sn).**

7. Device according to claim **5** or **6**,
**characterized in**
**that** the first detector **(53)** is connected with a discriminator **(56),** which delivers the additional signal **(Sm)** to a system control **(58).**

8. Device according to claim **6** or **7**,
**characterized in**
**that** a further discriminator **(57),** connected downstream of the two further detectors **(10** or **11),** is provided, which delivers this at least one error signal **(Sn)** to a system control **(58).**

9. Device according to claim **6** or **7**,
**characterized in**
**that** the scanning device **(5)** is connected to a control **(14),** which provides command signals **(St)** for at least one of the discriminators **(56, 57).**

10. Device according to claims **4** to **9**,
**characterized in**
**that** the receiver telescope **(2)** and/or an **FPA** unit contained in the fine alignment mechanism **(3)** are connected to the system control **(58)** via a **CPA** control **(174)** or an **FPA** control **(175).**

## Revendications

1. Dispositif d'établissement de connexion entre un récepteur et un émetteur se trouvant à distance de celui-ci au moyen d'ondes lumineuses (1) portant des signaux de données et une balise, où, pour l'acquisition des ondes lumineuses, un détecteur d'acquisition (171) est présent dans le récepteur, lequel génère à partir des ondes lumineuses reçues des signaux de détecteur d'acquisition (Sc), **caractérisé**
- **en ce que** les ondes lumineuses (1) guidées via un télescope récepteur (2) et un séparateur de faisceau (R4) sont amenées tant au détecteur d'acquisition (171) qu'à un dispositif à balayage (5) servant d'unité de déviation, et
- **en ce que**, à l'aide du dispositif à balayage (5), on recueille en plus d'un signal utile (Sa, Sb, Sn) aussi un signal supplémentaire (Sw) qui sert à faciliter l'acquisition.

2. Procédé selon la revendication 1, **caractérisé**
- **en ce que** la lumière provenant du dispositif à balayage (5) est guidée par une première fibre optique (7) vers un diplexeur (51), et
- **en ce que** la lumière dérivée par ce diplexeur (51) est amenée, par une seconde fibre optique (54), à un détecteur (53) qui fournit le signal supplémentaire permettant de faciliter l'acquisition.

3. Procédé selon la revendication 2, **caractérisé en ce qu'**en cas de réception superhétérodyne cohérente, même la lumière qui arrive par la première fibre optique (7) et le diplexeur (51) est dirigée vers un coupleur de fibres optiques (6), dans lequel cette lumière et la lumière guidée via une troisième fibre optique (13) d'un laser local (12) sont mélangées, la lumière mélangée étant séparée en deux faisceaux qui parviennent, respectivement par une autre fibre optique (8 ou 9), vers respectivement un autre détecteur (10 ou 11) pour générer au moins un signal d'erreur (Sn).

4. Dispositif de réalisation du procédé selon l'une des revendications 1 à 3, **caractérisé**
- **en ce que** le dispositif comprend un télescope récepteur (2) et un mécanisme d'alignement précis (3) ayant un séparateur de faisceau (R4) qui est exécuté pour amener la lumière par des moyens optiques (4 ; FA) tant à un détecteur d'acquisition (171) qu'à un dispositif à balayage (5) servant d'unité de déviation, et
- **en ce que**, à l'aide du dispositif à balayage (5), on recueille en plus d'un signal utile (Sa, Sb, Sn) aussi un signal supplémentaire (Sw) qui est efficace dans la phase d'acquisition indépendamment de ou conjointement au signal de détecteur d'acquisition (Sc).

5. Dispositif selon la revendication 4, **caractérisé en ce que** le dispositif à balayage (5) est relié par une première fibre optique (7) à un diplexeur (51), après lequel est intercalé via une seconde fibre optique (54) un détecteur (53) qui fournit un signal supplémentaire (Sm) permettant de faciliter l'acquisition.

6. Dispositif selon la revendication 5, **caractérisé en ce qu'**il comprend un coupleur de fibres optiques (6) relié côté entrée à un diplexeur (51) via une troisième fibre optique (52), lequel coupleur étant exécuté, en cas de réception superhétérodyne cohérente, pour mélanger la lumière provenant par le diplexeur (51) et la lumière guidée par une quatrième fibre optique (13) d'un laser local (12), et pour séparer la lumière mélangée en deux parties qui parviennent par respectivement une autre fibre optique (8 ou 9) à un autre détecteur respectif (10 ou 11) pour générer au moins un signal d'erreur (Sn).

7. Dispositif selon la revendication 5 ou 6, **caractérisé en ce que** le premier détecteur (53) est relié à un discriminateur (56), qui fournit le signal supplémentaire (Sm) à une commande de système (58).

8. Dispositif selon la revendication 6 ou 7, **caractérisé en ce qu'**il existe un autre discriminateur (57) intégré après les deux autres détecteurs (10 ou 11), et qui fournit au moins un signal d'erreur (Sn) à une commande de système (58).

9. Dispositif selon la revendication 6 ou 7, **caractérisé en ce que** le dispositif à balayage (5) est raccordé à une commande (14) qui fournit des signaux de commande (St) à au moins un des discriminateurs (56, 57).

10. Dispositif selon l'une des revendications 4 à 9, **caractérisé en ce que** le télescope récepteur (2) et/ou une unité FPA (Fine Pointing Assembly, ensemble de pointage précis) contenue(s) dans le mécanisme d'alignement précis (3) est/sont raccordée(s) à la commande de système (58) via une commande CPA (Coarse Pointing Assembly, ensemble de pointage de première approximation) (174) ou via une commande FPA (175).
